# EUROPÄISCHE PATENTSCHRIFT

(11) **EP 0 447 616 B1**
(45) Veröffentlichungstag und Bekanntmachung des Hinweises auf die Patenterteilung: **03.08.1994**
(21) Anmeldenummer: 90121194.6
(22) Anmeldetag: 06.11.1990
(51) Int. Cl.: H01M 6/08, H01M 4/08, H01M 2/36, H01M 4/12, B67D 5/02, G01F 11/08

(54) **Verfahren zum Einführen von viskosen aktiven Inhaltsstoffen in das Gehäuse eines galvanischen Elements**
Method of inserting active viscous ingredients in the housing of a galvanic element
Procédé pour introduire des ingrédients visqueux actifs dans le boîtier d'un élément galvanique

(30) Priorität: 17.03.1990 DE 4008705
(43) Veröffentlichungstag der Anmeldung: 25.09.1991
(73) Patentinhaber: VARTA Batterie Aktiengesellschaft, D-30405 Hannover (DE)
(72) Erfinder: Sauer, Hans, W-6270 Idstein-Walsdorf (DE)
(74) Vertreter: Kaiser, Dieter Ralf, Dipl.-Ing.

(56) Entgegenhaltungen:
- EP-A- 0 105 771
- DE-A- 2 126 307
- FR-A- 2 518 505
- GB-A- 1 223 680

## Beschreibung

Die Erfindung betrifft die Verwendung einer besonderen Vorrichtung zum Einfüllen von viskosen Füllstoffen in das Gehäuse eines galvanischen Elements.

Bei der Herstellung von galvanischen Becherelementen und Knopfzellen nimmt das Füllen der Gehäuse mit den aktiven Bestandteilen einschließlich Elektrolyt in genau dosierten Mengen einen breiten Raum ein. Dieser Fertigungsschritt ist besonders arbeitsintensiv, weshalb es nicht an Vorschlägen gefehlt hat, um das Einfüllverfahren mit Hilfe maschineller Vorrichtungen zu rationalisieren und einem automatisierten Fertigungsfluß anzupassen.

Während die Zugabe flüssiger Füllstoffe (Elektrolyt) über Dosierpumpen und Injektion der abgemessenen Flüssigkeitsmenge mittels Kanülen erfolgt, sind für das Einfüllen zumeist fester bzw. pulverförmiger Depolarisatormassen Preßwerkzeuge, etwa gemäß DE-AS 23 26 460 in Gebrauch, bei denen die Masse in einem Mundstück zu einem Preßkörper verdichtet wird und so als Massepfropfen in den Zellenbecher gelangt.

Die vorliegende Erfindung ist hingegen mit dem Dosieren fließfähiger Massen befaßt, wie sie beispielsweise als Elektrolytgele oder als hochviskose Zinkpasten bei alkalischen Rund- oder Knopfzellen in großen Mengen eingesetzt werden.

Für solche Füllstoffe von gelartiger Konsistenz sind wiederum andere geeignete Fülleinrichtungen, etwa gemäß DE-AS 16 71 861 oder DE-PS 26 16 732, in Gebrauch, mit denen sogar ein gleichzeitiges Einpressen der Masse für die positive Elektrode, für die negative Elektrode und eines vorverdickten Elektrolyten möglich ist. Zu diesem Zweck ist die Ausflußdüse aus drei koaxial angeordneten Hohldornen zur Formung der ausgetriebenen Stoffstränge geformt. Der Fördermechanismus dieser Einrichtungen arbeitet meist mit Kolbenbewegungen in Hohlzylindern, wobei über Druckleitungen die Füllstoffe den Zylindern zugeführt werden und Drehventile für die diskontinuierliche Zuteilung sorgen. Begrenzungsanschläge oder einfach der Kolbenhub sind die Mittel der volumetrischen Dosierung.

Fördereinrichtungen eines anderen Typs lassen sich der EP-OS 105 771 oder der FR-OS 2 518 505 entnehmen. Ihr Kernstück ist stets ein elastischer, an einen Vorratsbehälter für viskose Füllmassen angeschlossener gerader Schlauch, an dem eine von außen mittels Hebelkraft angedrückte Quetschrolle entlagfährt und dabei das viskose Füllgut aus dem zu einer Düse gestalteten Schlauchende hinaustreibt. Durch diesen Mechanismus können portionierte Mengen der Füllmasse einem Auffanggefäß zugeführt werden.

In der Praxis hatte es sich nun gezeigt, daß die Dosierung von Zinkpulvern, welche mit Alkalilauge und Gelifizierungsmitteln angeteigt werden, mittels bekannter drehventilgesteuerter Kolbenpumpen immer dann große Schwierigkeiten bereitet, wenn mit Rücksicht auf die verschärften Bestimmungen des Umweltschutzes ein quecksilberarmes Zink zum Einsatz gelangt. Mit den Partikeln eines solchen Zinks ergeben sich im Vergleich zu einem höher amalgamierten Zinkpulver innerhalb der Pasten größere Reibungswiderstände. Diese erzeugen dann vor Querschnittsverengungen, wie sie z. B. Dosierdüsen darstellen, einen Druckaufbau im Pumpengehäuse. Als Folge davon kommt es an engen Spalten, etwa zwischen dem Drehschieber und dem Ventilgehäuse, zu einer Trennung von Feststoff und Flüssigkeit in der Paste, wobei letztere aus der Paste herausgepreßt wird, während Feststoffpartikel zurückbleiben.

Dieses Verhalten führt zu einer Elektrolytverarmung und Verfestigung der Paste bis hin zu Verschweißungen der Zinkpartikel untereinander, was schließlich ein Blockieren des Drehschiebers nach sich zieht. Der beschriebene Effekt läßt sich an Zinkpulvern mit Hg-Anteilen < 1 % beobachten.

Da die herkömmlichen Kolbenpumpen hierdurch einem erhöhten Verschleiß unterliegen und jede Wiederinstandsetzung wegen der Neubeschaffung der hochwertigen Keramikteile sehr kostspielig ist, liegt der Erfindung die Aufgabe zugrunde, auf eine andere Weise eine zuverlässige und auf Dauer störungsfreie Förderung der viskosen Füllmasse sicherzustellen.

Die Aufgabe wird erfindungsgemäß durch die Verwendung einer Vorrichtung gelöst, wie sie im Patentanspruch 1 definiert ist.

Die erfindungsgemäß benutzte Vorrichtung zum Fördern und Dosieren stellt im Prinzip eine Schlauchpumpe dar. Sie besitzt den großen Vorteil, daß das zu fördernde Gut an keiner Stelle mit relativ zueinander bewegten Teilen in Berührung kommt, woraus gerade im Hinblick auf das weiter oben Gesagte unerwünschte Trenneffekte erwachsen könnten.

Der grundlegende Aufbau der Dosierpumpe sowie ihr Funktionsprinzip werden im folgenden anhand von Figurendarstellungen erläutert.

Figur 1 zeigt eine Dosierpumpe gemäß der Erfindung.

Figur 2 zeigt in Ausschnitten die Deformationszustände des Schlauchteils in vier Zeitmomenten eines Arbeitstaktes.

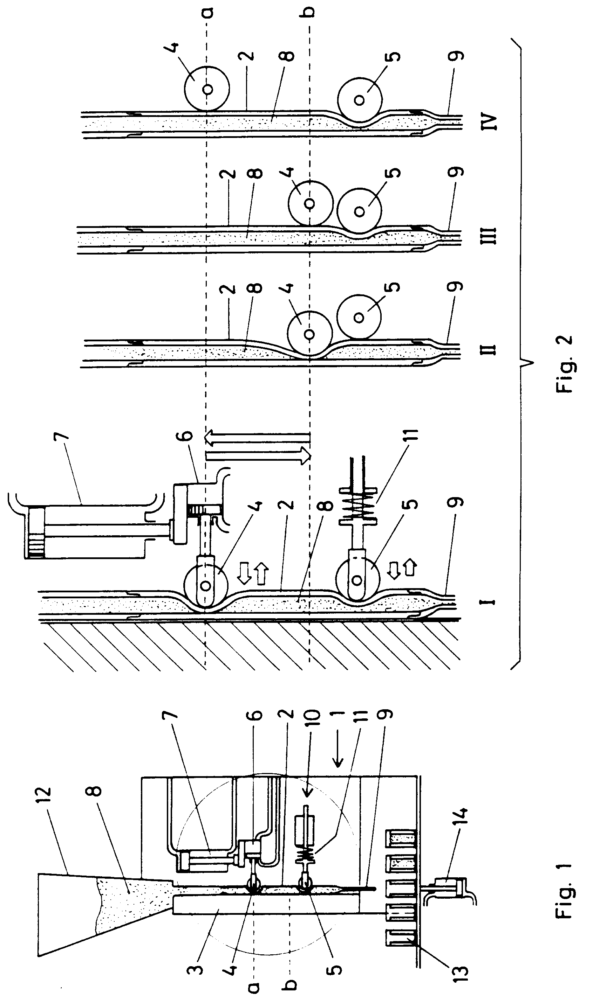

Nach Figur 1 besitzt die Dosiervorrichtung 1 als wesentliches Teil einen gummielastischen Schlauch 2, der einer senkrechten Schiene 3 anliegt und mittels senkrecht zum Schlauch und zur Schiene bewegbarer Andrückrollen 4,5 gequetscht werden kann. Die Schiene 3 fungiert dabei als Widerlager.

Während die Rolle 5 nur in der einen Richtung senkrecht zum Schlauch bewegbar ist, mithin der Schlauch durch diese Rolle immer nur an der gleichen Stelle gequetscht wird, besitzt das Bewegungsspiel der Rolle 4 noch eine parallel zum Schlauch gerichtete Komponente. Der Bewegungsantrieb in Andrückrichtung erfolgt durch einen luftdruckbetriebenen Arbeitszylinder 6, in Parallelrichtung zum Schlauch durch einen Arbeitszylinder 7.

Rolle 4 kann somit durch ein getaktetes Zusammenspiel der beiden Arbeitszylinder unter Andruck aus der hier dargestellten Position von einem oberen Begrenzungsanschlag a bis zu einem unteren Begrenzungsanschlag b am Schlauch entlanggeführt und von dort unter Aufhebung des Andrucks (Zurückziehen des Stempels 7 in Zylinder 6) auf die Höhe des Anschlags a wieder zurückgeführt werden. Durch die Abwärtsbewegung der Rolle 4 wird Inhalts- oder Füllstoff 8 in einer Menge, die dem Volumen des Schlauchstückes zwischen den Grenzen a und b entspricht, in Richtung zur Ausflußdüse 9 gedrückt.

Rolle 5 ist Bestandteil einer Quetscheinrichtung 10, mittels welcher der Schlauch nur an einer stets gleichen, diskreten Stelle, die sich hinter dem durch Rolle 4 quetschbaren Schlauchabschnitt a-b befindet, gequetscht werden kann. Sie ist damit nur in Andrückrichtung bewegbar und erhalt ihren Bewegungsantrieb beispielsweise durch eine einfache Spannfeder 11.

Bei einer vorzugsweisen Ausführungsform der Erfindung kann der Bewegungsantrieb von Rolle 5 jedoch statt der Feder auch in einem Arbeitszylinder -ähnlich Arbeitszylinder 6 bei Rolle 4 - bestehen. Ihre Bewegung läßt sich dadurch wie diejenige von Rolle 4 zeitabhängig steuern. Notfalls bedarf die Quetscheinrichtung 10 statt einer Rolle 5, da diese keine Abrollbewegung am Schlauch entlang vollführen muß, nur einer abgerundeten festen Kante für den vorgesehenen Zweck.

Mit 12 ist ein Vorratsbehälter für den Füllstoff bezeichnet. Unter der Ausflußdüse 9 bewegen sich die zu beschickenden Zellenbecher 13 hindurch. Sie können zeitgetaktet während der Füllphase mittels Arbeitzylinder 14 gegen die Mündung der Ausflußdüse hochgefahren und wieder abgesenkt werden.

Die Ausschnittsdarstellungen der Figur 2 sollen nunmehr den Fördermechanismus der Schlauchpumpe gemäß der Erfindung verdeutlichen, indem sie vier Bewegungsmomente I bis IV der Andrückrollen 4,5 mit den von diesen erzeugten Schlauchdeformationen während eines vollen Arbeitstaktes festhalten. Dabei geben die Pfeile die von den Rollen zwischen den Arbeitspositionen jeweils zurückgelegten Wegstrecken nach Größe und Richtung wieder.

Moment I: Rolle 4 ist fest gegen den Schlauch 2 gedrückt und beginnt ihre Abwärtsbewegung von a nach b. Rolle 5 übt auf den Schlauch 2 nur eine leichte Quetschung aus, indem die Spannfeder sich gegen die Rückstellkraft des elastischen Schlauchmaterials zu entspannen trachtet. Ein zusätzlich entgegenwirkender Preßdruck seitens der Füllmasse 8, von der herabfahrenden Rolle 4 erzeugt, hat sich noch nicht aufgebaut.

Moment II: Rolle 4 hat unter Quetschung des Schlauches Begrenzung b erreicht und die Füllstoffmenge, die zu Beginn ihrer Abwärtsbewegung im Schlauch zwischen a und b vorhanden war, in Richtung Ausflußdüse 9 gedrückt. Eine entsprechende Füllstoffmenge tritt aus der Ausflußdüse aus und füllt das darunter befindliche Zellgefäß. Wegen der Querschnittsverengung im übergang vom Schlauch 2 zur Düse 9 kommt es zu einem Stau des Materialflusses und damit zu einer Verdichtung des Füllstoffes in Höhe der Rolle 5, so daß diese vor dem Innendruck des Schlauches und zugleich vor seiner elastischen Rückstellkraft zurückweicht. Die Spannfeder 11 (hier und für die Folgemomente nicht dargestellt) wird dadurch gespannt.

Moment III: Rolle 4 ist durch Kolbenhub nach rechts in Arbeitszylinder 6 vom Schlauch 2 abgerückt.

Dadurch wird die Füllstoffverdichtung im Schlauchinnern im Bereich der Rolle 5 aufgehoben. Auf den Füllstoff 8 hat das Abrücken der Rolle 4 die Wirkung eines Saughebers: der bereits in der Ausflußdüse stehende Teil zieht sich, dem Dichte-Ausgleich im Schlauchende folgend, von der Mündung nach innen zurück, so daß die Gefahr eines Nachtropfens gebannt ist und die Einführung der vorgesehenen Füllmenge in den Zellenbecher mit großer Exaktheit erfolgt.

Gleichzeitig kehrt Rolle 5 in ihre Andruckposition, in der sie den Schlauch an dieser Stelle schließt bzw. ein Nachfließen des Füllstoffes von oben verhindert, zurück.

Moment IV: während Rolle 5 in ihrer Schließposition verblieben ist, wurde Rolle 4 durch den Arbeitszylinder 7 in vom Schlauch 2 zurückgezogener Position auf die obere Begrenzung a zurückverbracht.

Mit dem Andrücken von Rolle 4 an den Schlauch 2 durch Arbeitszylinder 6 beginnt der nächste Arbeitstakt.

Außer den schon genannten Vorteil, daß der Füllstoff nicht mit beweglichen Pumpenteilen in Berührung kommt, was im aktuellen Fall zu einem "Entsaften" des Gels oder der viskosen Paste führen kann, weist die Dosierpumpe gemäß der Erfindung noch weitere Vorzüge auf. So ist der Schlauch gewissermaßen ihr einziges Verschleißteil. Dieses kann leicht ausgewechselt werden. Die Bauweise des gesamten Aggregates ist einfach und erfordert keine hohen Anschaffungskosten. Der bei Kolbenpumpen unvermeidbare Ansaugtakt entfällt bei dieser Schlauchpumpe bzw. fällt mit dem Dosierschritt zusammen, weil die in Andruckposition von a nach b herabfahrende Rolle 4 gleichzeitig mit dem Ausdrücken des Schlauchinhalts neues Material unmittelbar nach sich zieht. Dadurch können größere Dosiergeschwindigkeiten, die bei Zellen von Mignon-Größe bei mindestens 40 Arbeitstakten pro Minute liegen, erreicht werden. Schließlich macht die größere Zuverlässigkeit der neuen Schlauchpumpe eine bessere Auslastung der Produktionsanlagen möglich.

## Patentansprüche

1. Verwendung einer Vorrichtung, die eine Düse enthält und zur Speisung der Düse mit viskosen Stoffen eine Pumpvorrichtung besitzt, welche aus einem elastischen, geraden Schlauchstück (2) besteht, entlang welchem eine Andrückrolle (4) zwischen zwei Begrenzungen (a, b) unter Quetschung des Schlauches in Richtung zur Austrittsdüse hin führbar und in vom Schlauch zurückgezogener Position in entgegengesetzter Richtung führbar ist, und bei der eine Einrichtung (10) vorhanden ist, mittels welcher das Schlauchstück an einer dem Streckenabschnitt (a - b)dicht auffolgenden diskreten Stelle quetschbar ist, zum Extrudieren einer Zinkpaste in das Gehäuse eines galvanischen Elements.

2. Verwendung nach Anspruch 1, dadurch gekennzeichnet, daß die Einrichtung zum Quetschen des Schlauchstücks an der diskreten Stelle eine Andrückrolle (5) in Verbindung mit einer Spannfeder (11) ist.

3. Verwendung nach Anspruch 1, dadurch gekennzeichnet, daß die Einrichtung zum Quetschen des Schlauchstücks an der diskreten Stelle eine Andrückrolle in Verbindung mit einem Kolbenantrieb ist.

4. Verwendung nach einem der Ansprüche 1 bis 3, dadurch gekennzeichnet, daß zum Bewegungsantrieb der Andrückrolle (4) in Richtung senkrecht zum Schlauchstück (2) und parallel zum Schlauchstück (2) Arbeitszylinder (6) und (7) vorhanden sind.

## Claims

1. Use of an apparatus which contains a nozzle and has, for feeding viscous substances to the nozzle, a pumping apparatus which comprises a resilient straight hose piece (2) along which a pressure roller (4) can be guided between two limit points (a, b), squashing the hose in the direction of the outlet nozzle, and can be guided in the opposite direction in a position withdrawn from the hose, and in which a device (10) is provided by means of which the hose piece can be squashed at a discrete place following closely behind the path length (a-b), for the purpose of extruding a zinc paste into the housing of a galvanic element.

2. Use according to Claim 1, characterized in that the device for squashing the hose piece at the discrete place is a pressure roller (5) in conjunction with a tension spring (11).

3. Use according to Claim 1, characterized in that the device for squashing the hose piece at the discrete place is a pressure roller in conjunction with a piston drive.

4. Use according to one of Claims 1 to 3, characterized in that, for the drive moving the pressure roller (4) in the directions perpendicular to the hose piece (2) and parallel to the hose piece (2), working cylinders (6) and (7) are provided.

## Revendications

1. Utilisation d'un dispositif qui contient une buse et possède un dispositif de pompage pour l'alimentation de la buse en matières visqueuses, constitué d'un segment de tuyau (2) élastique, rectiligne, le long duquel un rouleau de compression (4) est conduit entre deux limites (a, b), dans un sens, en direction de la buse de sortie, en écrasant le tuyau, et dans le sens opposé en position écartée par rapport au tuyau, et dans lequel est prévu un dispositif (10) au moyen duquel le segment de tuyau peut être écrasé en un emplacement ponctuel qui suit de près le tronçon (a - b), pour extruder une pâte de zinc dans le boîtier d'un élément galvanique.

2. Utilisation selon la revendication 1, caractérisée en ce que le dispositif d'écrasement du segment de tuyau à l'emplacement ponctuel est un rouleau de compression (5) en liaison avec un ressort de compression (11).

3. Utilisation selon la revendication 1, caractérisée en ce que le dispositif d'écrasement du segment de tuyau à l'emplacement ponctuel est un rouleau de compression en liaison avec un entraînement à piston.

4. Utilisation selon l'une des revendications 1 à 3, caractérisée en ce que des vérins (6) et (7) sont prévus pour produire le déplacement du rouleau de compression (4) dans la direction perpendiculaire au segment de tuyau (2) et dans la direction parallèle au segment de tuyau (2).
